# EUROPEAN PATENT APPLICATION

(11) **EP 2 187 603 A1**
(43) Date of publication of application: **19.05.2010**
(21) Application number: 07806543.0
(22) Date of filing: 31.08.2007
(51) Int. Cl.: H04M 1/274, H04M 1/56

(54) **TELEPHONE DEVICE AND METHOD OF REGISTERING TELEPHONE NUMBER**

(71) Applicant: Panasonic Corporation, Kadoma-shi Osaka 571-8501 (JP)
(72) Inventor: NAKAO, Masatoshi c/o Panasonic Corporation, Osaka 540-6207 (JP)
(74) Representative: Grünecker, Kinkeldey, Stockmair & Schwanhäusser Anwaltssozietät
(86) International application number: PCT/JP2007/067070
(87) International publication number: WO 2009/028105

(57) **Abstract**

A communication apparatus capable of reducing a burden caused by operation for registering a plurality of serial phone numbers is provided. A communication apparatus 100 includes a database 140 for storing information, an input section 110 for inputting input information including a start number and an end number showing a plurality of serial phone numbers, and a registered information management section 130 that registers registration information as serial phone numbers to the database 140 in accordance with the input information.

## Description

### Technical Field

The present invention relates to a communication apparatus capable of registering a plurality of serial phone numbers.

### Background Art

An IP centrex that switches; for instance, an intra-firm phone system, to an IP phone and that makes a connection with a server provided by a communication provider, to thus perform a communication, is recently becoming increasingly common. In relation to an IP centrex, one corporation, and the like, utilizes a plurality of serial phone numbers under blanket contract in many cases.

When a plurality of phone numbers are registered, a common practice is to register a phone number, one by one, in correspondence with the name of a party whose phone number is to be registered. However, under this method, registration operation involves consumption of much time and efforts.

In order to reduce a burden of operation for registering phone numbers, it has been known to carry out, as independent operations, operation for registering names of desired called parties and operation for registering phone numbers by means of a phone set having a tone dialing function (see; for instance, Patent Document 1).

Patent Document 1: JP-A-2001-186423

### Disclosure of the Invention

Problem that the Invention is to solve

However, the phone set of Patent Document 1 makes it possible to independently perform operation of registering names of desired called parties and operation for registering phone numbers but does not enable omission of the registration operations. Therefore, when lots of serial phone numbers must be registered at one time as in the case of a corporation utilizing an IP centrex, burdens on registrants become extremely large.

The present invention has been conceived in light of the circumstance and aims at providing a communication apparatus and a registration method that can reduce a burden caused by operation for registering a plurality of serial phone numbers.
Means for Solving the Problem

In order to achieve the objective, a first communication apparatus of the present invention includes a storage section for storing information; an input section that inputs input information including a start number and an end number showing a plurality of serial phone numbers; and a registered information management section that registers registration information as the serial phone numbers into the storage section in accordance with the input information.

By means of the configuration, a burden caused by operation for registering a plurality of serial phone numbers can be reduced.

A second communication apparatus of the present invention is configured that the registered information management section registers the serial phone numbers between the start number and the end number.

By means of the configuration, even when all serial phone numbers are registered, information to be input is suppressed to a minimum volume of information; hence, user's convenience is enhanced.

A third communication apparatus of the present invention is configured that the input section inputs the input information including an exclusion number excluded from the serial phone numbers along with the start number and the end number, and the registered information management section registers phone numbers sandwiched between the start number and the end number except the exclusion number.

By means of the configuration, even when phone numbers which are not desired to be registered are included in the serial phone numbers, the phone numbers can be designated so as to be excluded from objects of registration.

A fourth communication apparatus of the present invention is configured that the registered information management section registers the start number and the end number.

By means of the configuration, the volume of information registered in the storage section becomes remarkably reduced, so that effective utilization of memory becomes possible.

A fifth communication apparatus of the present invention is configured that the input section inputs the input information including an exclusion number excluded from the serial phone numbers along with the start number and the end number; and the registered information management section registers the exclusion number along with the start number and the end number.

By means of the configuration, even when a consideration is given to exclusion numbers, the volume of information registered in the storage section is remarkably reduced, so that memory can be effectively utilized.

A sixth communication apparatus of the present invention is configured so as to further include an incoming call detection section that detects an incoming call, wherein the input information includes a name of a user who uses the serial phone numbers and, when an incoming call is detected, the registered information management section causes a display section to display a name of a user corresponding to a phone number of the incoming call in a case where the phone number of the incoming call matches any of phone numbers sandwiched between the start number and the end number and where the phone number does not match the exclusion number.

By means of the configuration, even when there is actually an incoming call originated by a phone number that is not registered in the storage section, a name (the name of a calling party) can be displayed as if the phone number were registered, so long as the registration information assuming the form of serial phone numbers is kept.

A seventh communication apparatus of the present invention is also configured in such a way that, when an incoming call is detected, the registered information management section causes the display section to display a phone number of the incoming call in a case where the phone number of the incoming call does not belong to the phone numbers sandwiched between the start number and the serial end number or where the phone number of the incoming call matches the exclusion number.

By means of the configuration, an incoming call originated from any of exclusion numbers can be taken as an unregistered phone number. The phone number can be displayed rather than a designation being displayed, as in the case with the incoming call originated by a phone number other than the serial phone numbers.

An eighth communication apparatus of the present invention is configured so as to further include a call originating section that originates a call by means of a phone number for call origination that belongs to the phone numbers sandwiched between the start number and the end number and that is a phone number except the exclusion number.

By means of the configuration, the communication apparatus is effective for a case where the essential requirement is to be able to originate a call to any phone number rather than to a specific phone number. For instance, the communication apparatus enables efficient utilization of service provided by a legal entity having contracted serial phone numbers, taxi call service, ticket reservation service, and the like. Moreover, when information about serial phone numbers is registered in correspondence with names of called parties, the call originator can originate a phone call even if the call originator does not ascertain a phone number, so long as the call originator can ascertain the name of the called party.

A ninth communication apparatus of the present invention is configured that, when a called party using the phone number does not answer and a predetermined period of time has elapsed from a time of the call origination, the call originating section originates the call to a phone number other than the phone number used for originating a phone call.

By means of the configuration, even when a called party does not answer because of one phone number is busy, a call can consecutively be originated by means of other phone numbers after elapse of a predetermined period of time. In short, the user can consecutively originate a phone call to a predetermined called party by means of different phone numbers without performing special operation.

A first registration method of the present invention for a communication apparatus includes the steps of: inputting input information including a start number and an end number showing a plurality of serial phone numbers; and registering registration information as the serial phone numbers in accordance with the input information.

The method enables reducing of a burden caused by operation for registering a plurality of serial phone numbers.
Advantage of the Invention

The present invention makes it possible to reduce a burden caused by operation for registering a plurality of serial phone numbers.

### Brief Description of the Drawings

[Fig. 1] It is a block diagram showing an example configuration of a communication apparatus of a first embodiment of the present invention.
[Fig. 2] It is a flowchart of example operation performed when processing for registering phone numbers of the first embodiment of the present invention is carried out.
[Fig. 3] They are example input information and example registered information employed in phone number registration processing of the first embodiment of the present invention.
[Fig. 4] It is a block diagram showing an example configuration of a communication apparatus of a second embodiment of the present invention.
[Fig. 5] It is a view showing example information stored in a database of the second embodiment of the present invention.
[Fig. 6] It is a flowchart of example operation performed when processing for registering phone numbers of the second embodiment of the present invention is carried out.
[Fig. 7] They are example input information and example registered information employed in phone number registration processing of the second embodiment of the present invention.
[Fig. 8] It is a conceptual rendering showing example incoming call processing of the second embodiment of the present invention.
[Fig. 9] It is a conceptual rendering showing another example of incoming call processing of the second embodiment of the present invention.
[Fig. 10] It is a flowchart of example operation performed when incoming call processing of the second embodiment of the present invention is carried out.
[Fig. 11] It is a conceptual rendering showing example call origination processing of the second embodiment of the present invention.

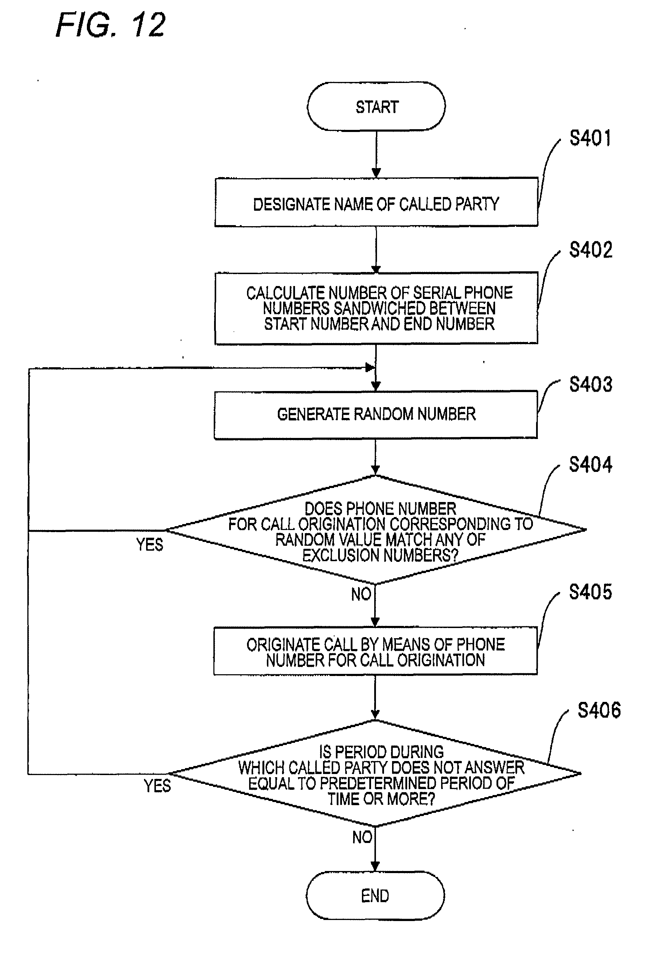

[Fig. 12] It is a flowchart of example operation performed when call origination processing of the second embodiment of the present invention is carried out.

### Descriptions of the Reference Numerals and Symbols

- 100, 200: COMMUNICATION APPARATUS
- 110: INPUT SECTION
- 120, 220: COMMUNICATION CONTROL SECTION
- 130, 230: REGISTERED INFORMATION MANAGEMENT SECTION
- 140,240: DATABASE

### Best Mode for Implementing the Invention

A communication apparatus of embodiments of the present invention is described in detail by reference to the drawings. Two types of embodiments are herein conceivable according to a data registration mode.

### (First Embodiment)

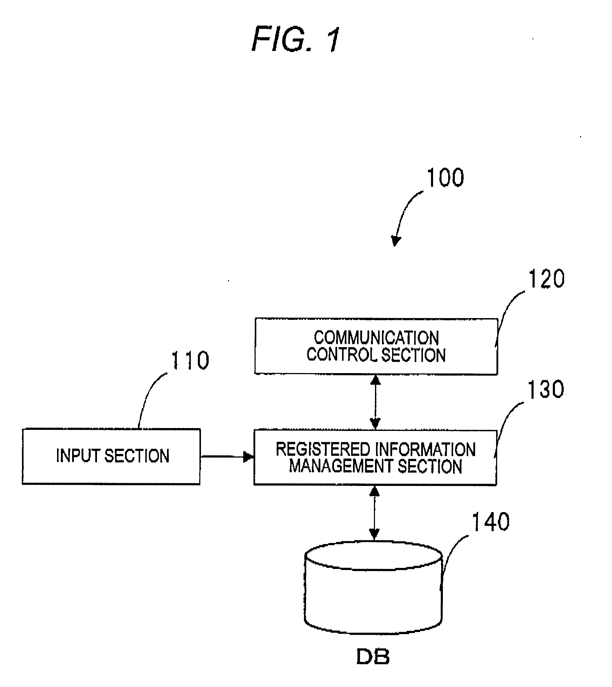

Fig. 1 is a block diagram showing an example configuration of a communication apparatus 100 of a first embodiment of the present invention. A communication terminal, and the like, that allows performance of communication by utilization of; for instance, a fixed line phone, a facsimile, a portable phone terminal, a communication terminal capable of performing communication by utilization of a phone number, and the like, is conceivable as the communication apparatus 100.

The communication apparatus 100 is built from an input section 110, a communication control section 120, a registered information management section 130, and a database 140.

The input section 110 inputs a name of a party to be registered (including a designation of a corporation, and the like) and a start number and an end number of a plurality of serial phone numbers. The input section 110 also allows entry of exclusion numbers to be excluded from registration among serial numbers. The input section 110 may also perform character input operation using characters or voice input operation using voice. The input section 110 is; for instance, a keyboard or a microphone for effecting voice input. When; for instance, a large volume of information, is registered, information may also be input by utilization of a barcode when a barcode is printed on a name card, and the like. Alternatively, information may also be input by transferring information that has been registered by a PC by utilization of custom-designed software. When there is a terminal that has already registered applicable information, the information may also be input by way of the terminal.

The communication control section 120 performs basic operations (call origination processing, incoming call processing, and others) of a telephone function. Call origination processing and incoming call processing are performed by a common method.

The registered information management section 130 registers phone number information in the database 140 and edits the thus-registered information. When a call is originated and an incoming call arrives, the registered information management section 130 searches and browses the phone number information registered in the database 140.

The database 140 stores a name of a registered party, phone numbers corresponding to the name, and exclusion numbers. The database 140 stores and manages one name in correspondence with one phone number. The database 140 is an example "storage section."

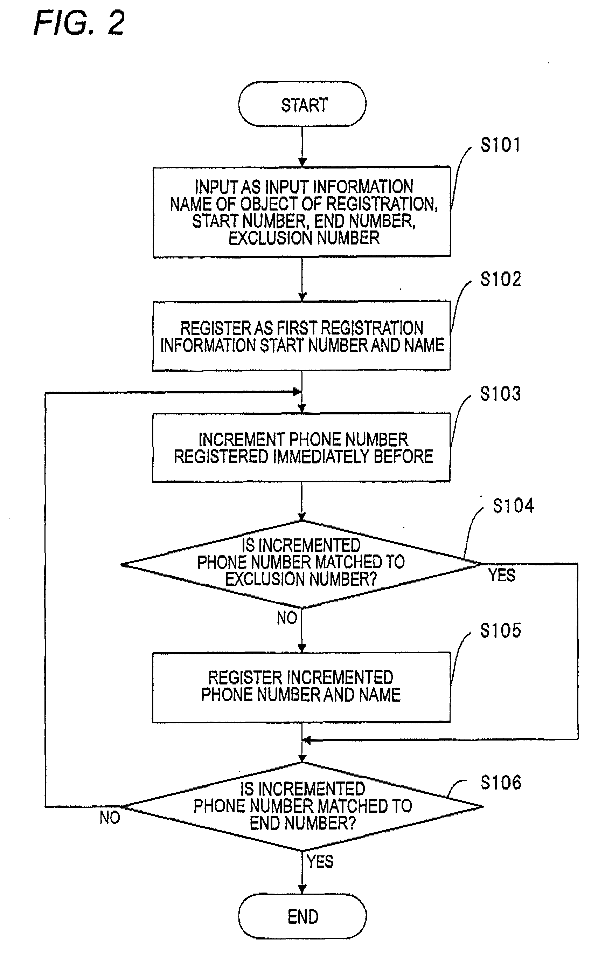

Example phone number registration processing of the communication apparatus 100 is now described. Fig. 2 is a view showing example operation performed when the communication apparatus 100 registers phone numbers.

First, under a command from a user, the input section 110 inputs, as input information, a name of a party to be registered, a start number and an end number of a plurality of serial phone numbers, and exclusion numbers to be excluded from registration (step S101).

Subsequently, the registered information management section 130 registers, as first registration information, an input start number and a name of a party into the database 140 (step S102).

The registered information management section 130 increments a phone number registered immediately before (by one) (step S103). In this case, when registration corresponds to; for instance, registration of the second phone number, the phone number of the first registered information is incremented. When registration corresponds to registration of the n^{th} phone number, a phone number of the n-1^{th} registered information is incremented.

Next, the registered information management section 130 determines whether or not the thus-incremented phone number is identical with any of the exclusion numbers (step S104). When a match is found, processing pertaining to step S105 is skipped.

The registered information management section 130 subsequently registers the thus-incremented phone number and a name corresponding thereto in the database 140 (step S105).

The registered information management section 130 then determines whether or not the thus-incremented phone number is identical with the input end number (step S106). When they are not identical with each other, processing returns to a point immediately before step S103. In contrast, when they are identical with each other, phone number registration processing is terminated.

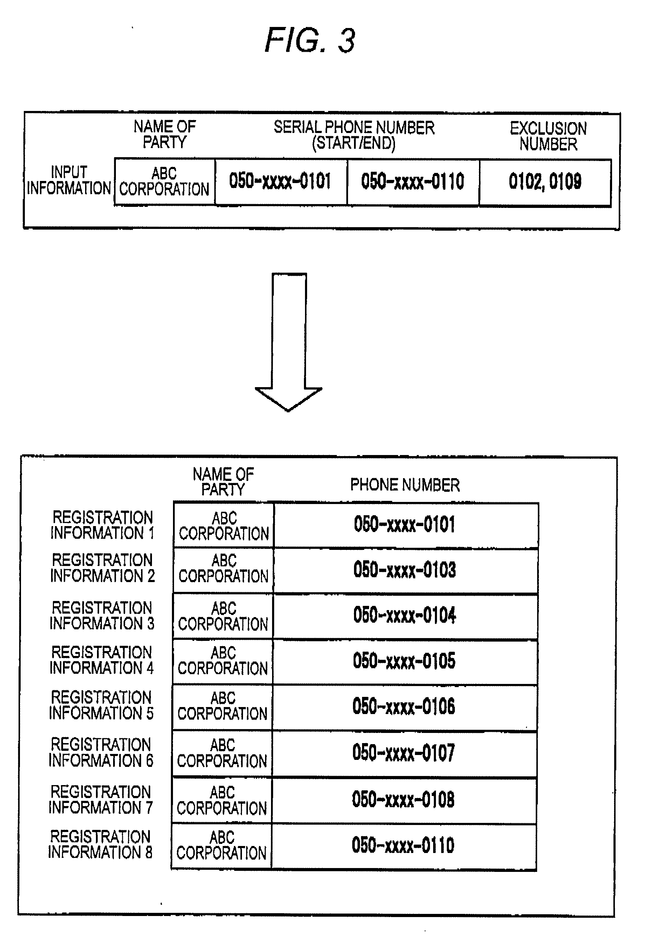

Fig. 3 is example input information and example registered information in phone number registration processing of the communication apparatus 100.

Only a name, a start number and an end number of a plurality of serial phone numbers, and exclusion numbers to be excluded from registration are input as input information to be input by way of the input section 110. However, phone numbers are registered in such a way that one name is given one phone number, as registration information registered in the database 140.

Such a communication apparatus 100 enables reducing of a burden caused by operation for registering a plurality of serial phone numbers.

### (Second Embodiment)

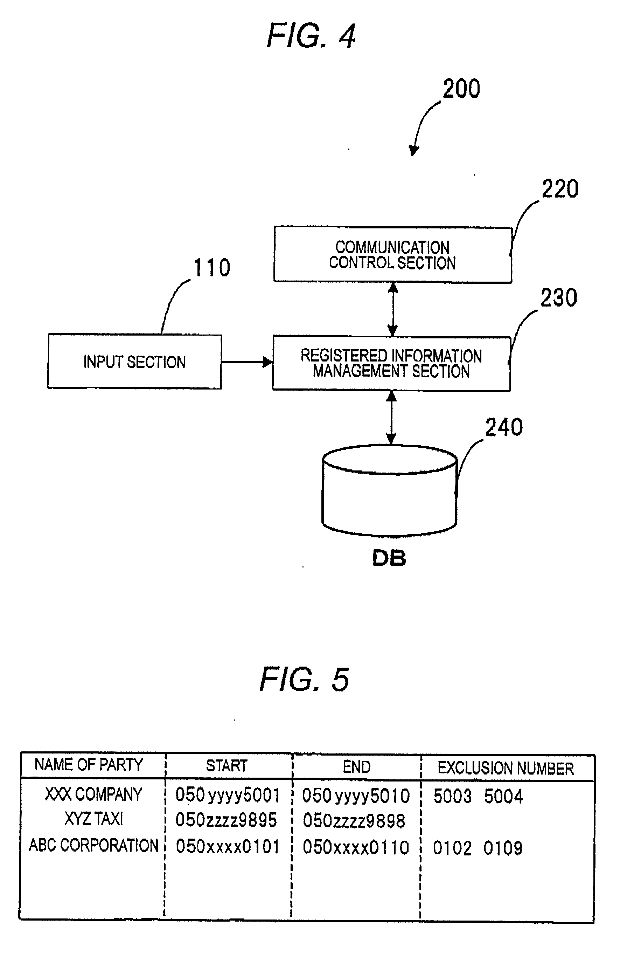

Fig. 4 is a block diagram showing an example configuration of a communication apparatus 200 of a second embodiment of the present invention. A communication terminal, and the like, that allows performance of communication by utilization of; for instance, a fixed line phone, a facsimile, a portable phone terminal, a communication terminal capable of performing communication by utilization of a phone number, and the like, is conceivable as the communication apparatus 200. In the communication apparatus 200, constituent elements having the same functions as those of the constituent elements in the communication apparatus 100 are assigned the same reference numerals, and their explanations are omitted or simplified.

The communication apparatus 200 has the input section 110, a communication control section 220, a registered information management section 230, and a database 240.

The communication control section 220 performs basic operations (call origination processing, incoming call processing, and the like) serving as phone functions. The communication control section 220 has a function of an "incoming call detection section" and a function of a "call originating section."

The registered information management section 230 registers phone number information in the database 240 and edits the thus-registered phone number information, and also searches and browses phone number information registered in the database 240 at the time of call origination, receipt of an incoming call, and the like.

The database 240 stores a name of a registered party, a start number and an end number of serial phone numbers corresponding to the name of the party, and exclusion numbers. Since one name is not registered in correspondence with one phone number in the database 140, memory can efficiently be utilized. Fig. 5 shows example information stored in the database 240. The database 240 is an example "storage section."

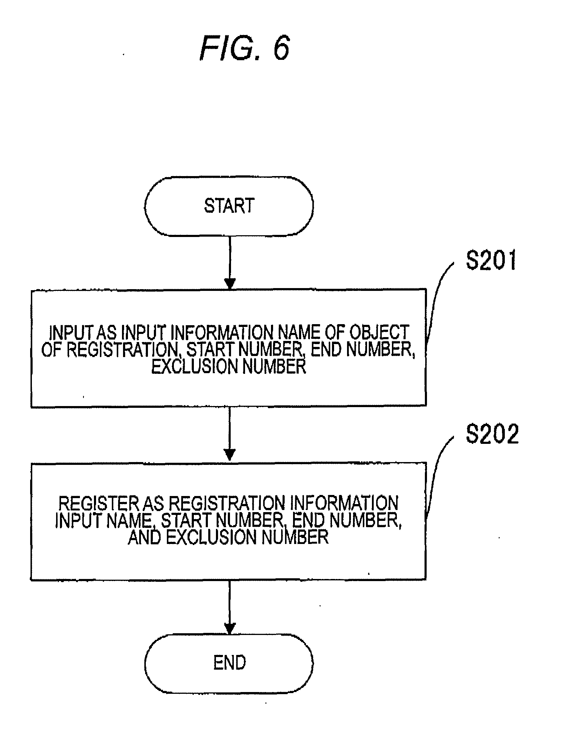

Example phone number registration processing of the communication apparatus 200 will now be described. Fig. 6 is a view showing example operation performed when the communication apparatus 200 registers phone numbers.

First, under a user's command, the input section 114 inputs, as input information, a name of a party to be registered, a start number and an end number of a plurality of serial phone numbers, and exclusion numbers to be excluded from registration (step S201).

The registered information management section 230 subsequently registers, as registered information, a name of an input party, a start number and an end number of serial phone numbers corresponding to the name of the party, and exclusion numbers in the database 240 (step S102).

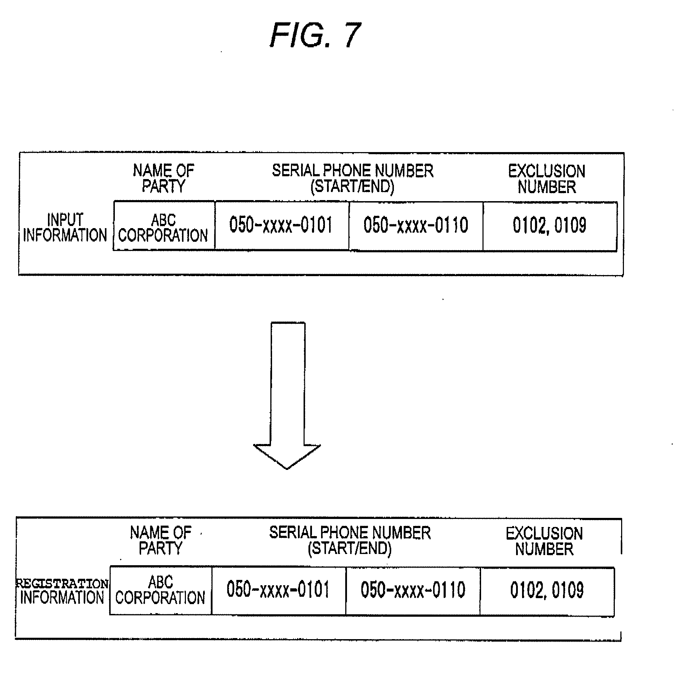

Fig. 7 shows example input information and registered information in phone number registration processing of the communication apparatus 200.

A name to be registered, a start number and an end number of a plurality of serial phone numbers, and exclusion numbers to be excluded from registration are input as input information to be input by way of the input section 110. Input information is registered as it is as registration information to be registered in the database 140.

By means of phone number registration processing of such a communication apparatus 200, a burden caused by operation for registering a plurality of serial phone numbers can be reduced. Only a start number and an end number of serial phone numbers are registered rather than all serial phone numbers being registered. Therefore, memory can efficiently be utilized. Moreover, erroneous registration of phone numbers can also be prevented.

In Fig. 7, all digits (including 050-xxxx) of respective phone numbers (a start number/an end number) and all digits of exclusion numbers may also be registered as registration information in the database 240. Alternatively, all digits of only one phone number may be registered, and portions of the other phone numbers, such as last four digits of the other phone numbers, may also be registered.

The exclusion numbers may also be subjected to range specification (a start exclusion number and an end exclusion number are registered, and phone numbers sandwiched therebetween are also taken as exclusion numbers) as in the case with the phone numbers to be registered.

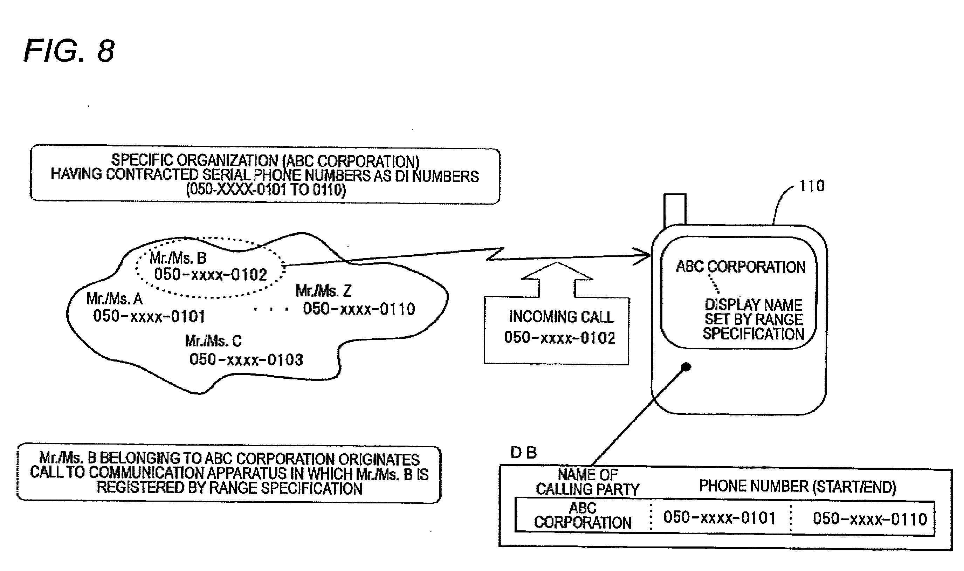

Example incoming processing of the communication apparatus 200 is now described. Fig. 8 is a conceptual rendering showing example incoming call processing of the communication apparatus 200. Fig. 8 shows a case where an incoming call does not correspond to any of exclusion numbers.

For instance, an ABC corporation is provided with contracted serial phone numbers as DI phone numbers. When a phone call originated by any one of the thus-contracted phone numbers is received as an incoming call, the communication apparatus 200 displays on a screen the name of a party (the designation of a calling party) registered in the database 240. When specific operation (generation of an incoming sound and vibration) is designated as operation for the time of an incoming call in place of or in combination with a display, the communication apparatus 200 performs operation complying with the designation.

Such incoming processing is effective for a case where realization of only rough information, or an incoming call from a member suffices; for instance, a case where a plurality of members perform a single task in a teamwork with each other and where each of the members has an external phone number.

The communication apparatus 200 may also register only a portion of heads of phone numbers. In this case, for instance, so long as 075 is registered as a start number and also as an end number, when an incoming call from 075-xxxx-xxxx is received, the call is determined to be an incoming call from a 075 (Kyoto) district.

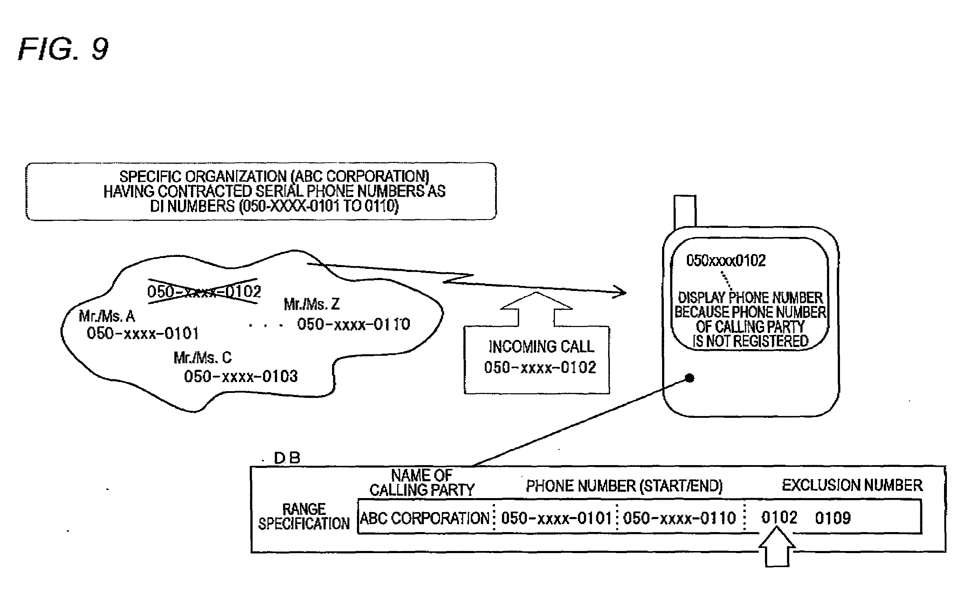

In the meantime, Fig. 9 is a conceptual rendering showing another example incoming processing of the communication device 200. Fig. 9 shows a case where the phone number of an incoming call is an exclusion number.

For instance, when an ABC corporation is provided with contracted serial phone numbers as DI numbers and when a phone call originated from one exclusion number among the serial phone numbers is received as an incoming call, the communication apparatus 200 displays the phone number of the incoming call on a screen. Specifically, in the communication apparatus 200, the phone number of the incoming call is taken as belonging to the range-specified serial phone numbers but unregistered in the database 240.

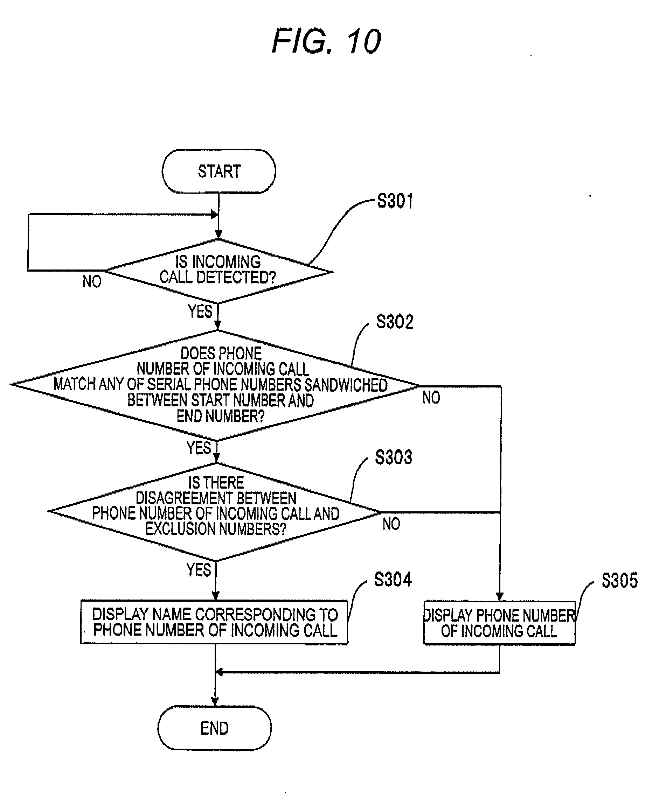

Fig. 10 is a flowchart showing example operation performed when the communication apparatus 200 carries out incoming call processing. Explanations are provided to incoming call processing up to a step of providing a display on a display section.

When the communication control section 220 first detects an incoming call from an external communication apparatus (step S301). The registered information management section 230 performs a search through the database 240, thereby determining whether or not the phone number of the incoming call corresponds to any of serial phone numbers sandwiched between a start number and an end number of serial phone numbers stored in the database 240 (step S302).

When the phone number of the incoming call matches any of the numbers sandwiched between the start number and the end number, the registered information management section 230 determines whether or not the phone number of the incoming call is an exclusion number (step S303).

When the phone number of the incoming call does not correspond to any exclusion numbers, the registered information management section 230 displays on an unillustrated display section a name of a party (the designation of a calling party) corresponding to the phone number of the incoming call stored in the database 240 (step S304).

When the phone number of the incoming call does not correspond to any of the serial phone numbers sandwiched between the start number and the end number or when the phone number of the incoming call corresponds to any of the serial phone numbers sandwiched between the start number and the end number and also corresponds to any of exclusion numbers, the registered information management section 230 displays the phone number of the incoming call on a display section not shown in Fig. 4 (step S305).

According to incoming processing of such a communication apparatus 200, it is not necessary to identify individual users who are using respective phone numbers. Alternatively, when users who are using respective phone numbers are uncertain and when the essential requirement is specification of an organization utilizing serial phone numbers including a phone number of interest, the organization corresponding to a calling party can readily be recognized.

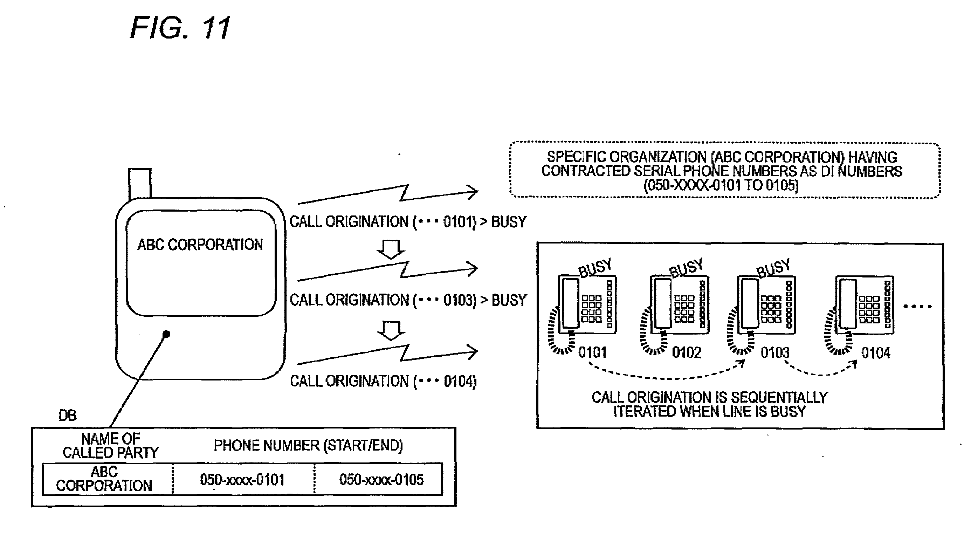

Example call origination processing of the communication apparatus 200 is now described. Fig. 11 is a conceptual rendering showing example call origination processing of the communication apparatus 200.

For instance, an ABC corporation is provided with contracted serial phone numbers as DI numbers, and the communication apparatus 200 originates a call to one phone utilizing any one of the serial phone numbers. In this case, a call is originated by means of any of the serial phone numbers without specifying which one of the plurality of phone numbers is taken as a call destination. When the phone number by means of which a call is originated is busy, a call is automatically, iteratively originated by means of any phone numbers.

Such call origination processing is effective for service for which one organization has a plurality of contracted or publicly-released serial phone numbers and in which the minimum requirement is arrival of an incoming call by means of any of the serial phone numbers. Call origination processing is effected for; for instance, a case where a call is originated to any of a plurality of publicly-released phone numbers in order to call a taxi; a case where a ticket for service that will be started at a specified time is reserved; and the like. As a result of performance of call origination processing, it becomes possible to efficiently carry out call origination processing within a short period of time.

Example call origination processing of the communication apparatus 200 is now described. A flowchart showing example operation performed when the communication apparatus 200 performs call origination processing. By reference to Fig. 5, a specific example is described in combination.

First, a name of a party to which a call is to be originated (a name of a called party) is specified by means of the input section 110, and the like (step S401). For instance, the name of the called party (the ABC corporation) is selected in Fig. 5. A conceivable way at the time of designation of a name of a called party is to display a list of names stored in the database 240 and select a name from the list by way of the input section 110.

Subsequently, the registered information management section 230 searches the database 240 and counts the number of serial phone numbers from a start number to an end number corresponding to the designated name of the called party (step S402). For instance, in Fig. 5, the ABC corporation corresponds to a start number of 0101 and an end number of 0110. Hence, the number of serial phone numbers is ten.

The registered information management section 230 subsequently generates a random number that takes a calculated number as the maximum value (step S403). For instance, a random number is assumed to fall within a range from 1 to 10 and generates two as the random number.

The registered information management section 230 subsequently determines whether or not a phone number for call origination corresponding to the randomly-generated number coincides with any of the exclusion numbers (step S404). For instance, when the random number is two, a phone number for call origination is 050-xxxx-0102.

When the phone number for call origination matches any of the exclusion number, processing returns to a point immediately before step S403. For instance, when the random number is two, the phone number for call origination 050-xxxx-0102 is determined to be an exclusion number as a result of a reference being made to the database 240. Hence, processing returns to a point immediately before step S403 in order to regenerate the random number.

When the phone number for call origination does not match any of the exclusion numbers, the communication control section 220 originates a call to the phone number for call origination corresponding to the randomly generated number (step S405). For instance, when a random number is three, a phone number for call origination 050-xxxx-0103 is determined not to be an exclusion number as a result of a reference being made to the database 240. Hence, a call is originated to the phone number for call origination. When a party utilizing the phone number for call origination has answered the phone call, processing is terminated.

Subsequently, the communication control section 220 determines whether or not a predetermined period of time has elapsed from a call origination time without an answer from the called party (step S406). When the predetermined period of time has elapsed, processing returns to a point immediately before step S403, For instance, when the random number is three and when the phone number for call origination 050-xxxx-0103 is busy, a random number is again generated, and an attempt is made to perform redialing by means of another phone number for call origination. Even when the called party cannot answer because the phone number for call origination is busy, a call can consecutively be originated to any of the serial phone numbers.

According to the call origination processing of such a communication apparatus 200, when a call is originated to a called party who can utilize serial phone numbers, a call can be automatically, continually originated by utilization of different phone numbers. Therefore, when, for instance, one phone number is busy, redialing does not need to be performed by utilization of another phone number, and user's convenience is remarkably enhanced.
Industrial Applicability

The present invention is useful for a communication apparatus, and the like, that can reduce a burden caused by operation for registering a plurality of serial phone numbers.

## Claims

1. A communication apparatus comprising:
a storage section for storing information;
an input section that inputs input information including a start number and an end number showing a plurality of serial phone numbers; and
a registered information management section that registers registration information as the serial phone numbers into the storage section in accordance with the input information.

2. The communication apparatus according to claim 1, wherein the registered information management section registers the serial phone numbers between the start number and the end number.

3. The communication apparatus according to claim 2, wherein the input section inputs the input information including an exclusion number excluded from the serial phone numbers along with the start number and the end number; and
wherein the registered information management section registers phone numbers sandwiched between the start number and the end number except the exclusion number.

4. The communication apparatus according to claim 1, wherein the registered information management section registers the start number and the end number.

5. The communication apparatus according to claim 4, wherein the input section inputs the input information including an exclusion number excluded from the serial phone numbers along with the start number and the end number; and
wherein the registered information management section registers the exclusion number along with the start number and the end number.

6. The communication apparatus according to claim 5, further comprising:
an incoming call detection section that detects an incoming call,
wherein the input information includes a name of a user who uses the serial phone numbers; and
wherein when an incoming call is detected, the registered information management section causes a display section to display a name of a user corresponding to a phone number of the incoming call in a case where the phone number of the incoming call matches any of phone numbers sandwiched between the start number and the end number and where the phone number of the incoming call does not match the exclusion number.

7. The communication apparatus according to claim 6, wherein, when the incoming call is detected, the registered information management section causes the display section to display the phone number of the incoming call in a case where the phone number of the incoming call does not belong to the phone numbers sandwiched between the start number and the end number or where the phone number of the incoming call matches the exclusion number.

8. The communication apparatus according to claim 5, further comprising:
a call originating section that originates a call to a phone number for call origination that belongs to the phone numbers sandwiched between the start number and the end number and that is a phone number except the exclusion number.

9. The communication apparatus according to claim 8, wherein, when a call origination party using the phone number for call origination does not answer and a predetermined period of time has elapsed from a time of the call origination, the call originating section originates the call to a phone number for call origination other than the phone number for call origination.

10. A registration method for a communication apparatus, comprising:
inputting input information including a start number and an end number showing a plurality of serial phone numbers; and
registering registration information as the serial phone numbers in accordance with the input information.

## Amended claims

### Amended claims under Art. 19.1 PCT

1. A communication apparatus comprising:
a storage section for storing information;
an input section that inputs a start number and an end number as input information ; and
a registered information management section that registers serial phone numbers from the start number to the end number into the storage section as registration information in accordance with the input information.

2. The communication apparatus according to claim 1,
wherein the input section inputs an exclusion number excluded from the serial phone numbers to be registered into the storage section as the input information along with the start numbers and the end number; and
wherein the registered-information management section registers phone numbers from the start number to the end number except the exclusion number.

3. The communication apparatus according to claim 2, further comprising:
an incoming call detection section that detects an incoming call,
wherein the storage section stores a name of a user corresponding to the serial phone numbers; and
wherein when the incoming call is detected, the registered in formation management section causes a display section to display the name of the user corresponding to a phone number of the incoming call if the phone number of the incoming call matches any of the phone numbers from the start number to the end number and if the phone number of the incoming call does not match the exclusion number.

4. The communication apparatus according to claim 3, wherein, when the incoming call is detected, the registered information management section causes the display section, to display the phone number of the incoming call if the phone number of the incoming call does not belong to the phone numbers from the start number to the end number or if the phone number of the incoming call matches the exclusion number.

5. The communication apparatus according to claim 2, further comprising:
a call originating section that originates a call to a call origination number which is a phone number that belongs to the phone numbers from the start number to the end number except the exclusion number,
wherein, if an other party using the call origination number have not answered and at predetermined period of time has elapsed from a time of the call origination, the call originating section automatically originates a call to a phone number other than the call, origination number; and
wherein when the other a answers the call originating section terminates the call origination.
